# EUROPÄISCHE PATENTSCHRIFT

(11) **EP 2 302 557 B1**
(45) Veröffentlichungstag und Bekanntmachung des Hinweises auf die Patenterteilung: **06.01.2016**
(21) Anmeldenummer: 10175966.0
(22) Anmeldetag: 09.09.2010
(51) Int. Cl.: G06K 7/00

(54) **RFID-Kommunikationssystem zur Konfiguration und Parametrierung**
RFID communication system for configuring and setting parameters
Système de communication RFID pour la configuration et le paramétrage

(30) Priorität: 16.09.2009 DE 102009041671
(43) Veröffentlichungstag der Anmeldung: 30.03.2011
(73) Patentinhaber: BROOKS Automation (Germany) GmbH, 95490 Mistelgau (DE)
(72) Erfinder: Buchmann, Harald, 95463 Bindlach (DE)
(74) Vertreter: Körber, Martin Hans

(56) Entgegenhaltungen:
- US-A1- 2007 095 915
- US-A1- 2008 094 222
- US-A1- 2008 104 010
- US-A1- 2009 047 624

## Beschreibung

Die vorliegende Erfindung beschreibt ein Radio-Frequency-Identification-Kommunikationssystem (RFID-Kommunikationssystem) und ein Konfigurationsverfahren bei dem ein RFID-Gerät mittels einer Antenne und einem mobilen Transponder konfiguriert und parametriert wird.

RFID-Kommunikationssysteme umfassen in der Regel ein RFID-Gerät zum Auslesen und/oder Beschreiben eines Transponders. An das RFID-Gerät ist dafür eine Antenne elektrisch angeschlossen, die entweder fest in das RFID-Gerät integriert ist, oder als externes Gerät genutzt wird. Zur Kommunikation mit dem Transponder erzeugt die Antenne des RFID-Geräts ein elektromagnetisches Feld geringer Reichweite, das in einer Antenne des Transponders eine Spannung induziert. Damit können einerseits Daten zwischen dem RFID-Gerät und dem Transponder übertragen werden, andererseits wird dadurch der Transponder mit Energie versorgt.

RFID-Kommunikationssysteme besitzen zahlreiche Anwendungsmöglichkeiten, wie z.B. automatische Datenerfassung oder automatische Objektidentifikation. Mögliche Einsatzgebiete sind dabei die Verkehrsüberwachung, Kontrolle von Produktionslogistik, die Identifizierung von Personen oder die Echtheitszertifizierung von Banknoten.

Die Frequenzbereiche auf denen solche RFID-Kommunikationssysteme operieren variieren je nach Einsatzzweck. Dabei werden typischerweise Frequenzen von 30 kHz (z.B. Produktionslogistik) bis zu 3 GHz oder mehr (z.B. Verkehrsüberwachung) abgedeckt. Die Reichweite der Kommunikation hängt stark von der verwendeten Frequenz ab, je höher die Frequenz desto größer die Reichweite. Übliche Reichweiten liegen in Bereichen von maximal 50 cm bis maximal 50 m.

Um ein hohes Maß an Zuverlässigkeit auch unter schwierigen äußeren Bedingungen zu ermöglichen, sind RFID-Geräte in der Regel durch ortsspezifische und gerätespezifische Einstellungen konfiguriert. Entsprechende Konfigurationsdaten werden üblicherweise in einem internen Speicher des RFID-Geräts gespeichert. Zusätzlich gibt es in der Technik Anwendungen, bei denen die Konfigurationsdaten des RFID-Geräts auf verschiedene externe elektronische Speichermedien (z.B. SD-Speicherkarte, Memory-Stick, USB-Stick, oder CF-Speicherkarte) abgelegt werden.

Durch externe Speicherung kann die Konfiguration nach einem Ausfall des RFID-Geräts oder nachdem die Parameter des RFID-Geräts verstellt wurden schnell wieder in den Ausgangszustand zurückgesetzt werden. Außerdem können Ersatzgeräte für ausgetauschte, defekte RFID-Geräte auf einfache Weise mit den ortsspezifischen Daten des alten RFID-Geräts konfiguriert werden.

Auch eine Konfiguration mehrerer RFID-Geräte kann mit einem externen, transportierbaren Speichermedium einfach und schnell durchgeführt werden.

Ein Speichermedium, das die Konfigurationsdaten für einen Montageort enthält, verbleibt in der Regel an diesem Ort, damit die entsprechenden Konfigurationsdaten dort stets schnell verfügbar sind.

US 2008/0104010 A1, das den Oberbegriff des Anspruchs 1 bildet, offenbart eine Vorrichtungskonfiguration, um ein RFID-Lesegerät mittels eines RFID-Tags zu konfigurieren. Das RFID-Tag wird dabei vom RFID-Lesegerät ausgelesen, um die Lese-Konfigurationsinformationen zu erhalten und einen Konfigurationsspeicher des RFID-Lesegerätes zur Aufbewahrung der Konfigurationsdaten entsprechend zu modifizieren.

US 2009/0047624 A1 offenbart ein Ultraschallgerät, in dessen Haupteinheit ein RFID-Leser installiert ist, der mit einer in ein Handgerät eingebauten Antenne verbunden ist. Ein Ende des Handgerätes weist dabei ein Anschlußloch auf, in das ein RFID-Tag eingesteckt werden kann.

US 2008/0094222 A1 offenbart einen Musterkoffer zur Aufbewahrung von Verkaufsartikeln, die mit einem RFID-Tag versehen sind und ein RFID-Lesesystem, das auf den Koffer ausgerichtet ist. Dabei weist der Koffer einerseits eine eingebaute RFID-Antenne auf, die mit den RFID-Tags drahtlos kommuniziert, und andererseits eine RFID-Kommunikationseinrichtung, die mit der eingebauten RFID-Antenne verbunden ist, aber außerhalb des Koffers vorgesehen ist, um mit den RFID-Tags eine drahtlose Kommunikationsverbindung einzurichten.

US 2007/0095915 A1 offenbart ein Verfahren zum Testen von RFID-Geräten. Dabei liest ein RFID-Leser ein Referenz-RFID-Tag aus und sendet die Referenzinformation zu einem Computer .Im Falle daß das Referenz-RFID-Tag nach einer bestimmten Anzahl von Abfragen nicht reagiert, veranlaßt der RFID-Leser oder der Computer über möglicherweise verschiedene Netzwerke die Anzeige oder Ausgabe einer Fehlermeldung.

Der Nachteil der oben erläuterten RFID-Kommunikationssysteme, in denen die Konfigurationsdaten auf eines der genannten externen, elektronischen Speichermedien abgelegt werden können, ist, dass die Konfigurationsdaten elektrisch an das RFID-Gerät übertragen werden müssen. Eine leitende Verbindung gemäß der Schnittstellenspezifikation des jeweiligen Speichermediums ist daher notwendig, weshalb eine zum Speichermedium passende Steckverbindung in das RFID-Gerät eingebaut werden muss. Eine solche zusätzliche Steckverbindung verursacht erhöhte Herstellungskosten des RFID-Geräts, außerdem muss zusätzlicher Platz am RFID-Gerät zur Verfügung gestellt werden, wodurch eine kompaktere Bauweise verhindert wird. Des Weiteren ist nicht bei jeder Installation des RFID-Geräts in seine Umgebung garantiert, dass eine Steckverbindung von außen zugänglich gemacht werden kann.

Es ist daher die Aufgabe der vorliegenden Erfindung, den Stand der Technik zu verbessern. Insbesondere ist es Aufgabe der vorliegenden Erfindung, ein RFID-Kommunikationssystem für ein RFID-Gerät bereitzustellen, wodurch das RFID-Gerät kompakt und kostengünstig konstruiert und unter allen Umständen einfach konfiguriert und parametriert werden kann.

Die Aufgabe wird durch ein RFID-Kommunikationssystem zur Konfiguration und Parametrierung gemäß Anspruch 1 gelöst.

Das erfindungsgemäße RFID-Kommunikationssystem umfasst ein RFID-Gerät, eine erste Antenne, zum Senden und Empfangen von Daten, und einen Transponder. Der Transponder umfasst wiederum eine zweite Antenne zum Senden und Empfangen von Daten und einen Speicher zum Speichern von Konfigurationsdaten. Die gespeicherten Konfigurationsdaten stehen dem RFID-Gerät drahtlos über die beiden Antennen zur Verfügung.

Dabei ist die Gerätefirmware des Radio-Frequency-Identification-Geräts (4) geeignet, um die Funktionsfähigkeit der ersten Antenne (3) zu testen, indem sie von einer Konfigurations-Anwendung unabhängige Lese- und/oder Schreibtests durchführt, wobei die Testschritte der Lese- und/oder Schreibtests auf dem Transponder (2) gespeichert sind und/oder die Testergebnisse nach jedem Lese- und/oder Schreibtest auf dem Transponder (2) gespeichert werden.

Das erfindungsgemäße RFID-Kommunikationssystem ermöglicht daher, dass das RFID-Gerät über eine drahtlose Übertragung der Konfigurationsdaten vom Transponder konfiguriert werden kann. Daher ist keine zusätzliche Steckverbindung bzw. Schnittstelle für Speichermedien notwendig, wodurch Herstellungskosten gespart werden können, das Gerät kleiner konstruiert werden kann und die Installation des RFID-Geräts flexibler wird, da nicht auf die Zugänglichkeit einer Steckverbindung geachtet werden muss.

Bei der Datenübertragung werden die im Speicher des Transponders gespeicherten Konfigurationsdaten über die zweite Antenne zur ersten Antenne des RFID-Geräts übermittelt und dort zur Konfiguration weiterverwendet. Wenn sich die zweite Antenne während des Betriebs der RFID-Kommunikationssystem im Empfangsbereich der ersten Antenne des RFID-Geräts befindet, stehen die Daten dem RFID-Gerät permanent zur Verfügung und das RFID-Gerät benötigt nicht unbedingt einen zusätzlichen internen Speicher zum Zwischenspeichern der Konfigurationsdaten. Dadurch kann das RFID-Gerät nochmals kostengünstiger und kompakter konstruiert werden. Es ist natürlich trotzdem möglich einen internen Speicher zum Zwischenspeichern der Konfigurationsdaten in das RFID-Gerät einzubauen.

In einer ersten Ausführungsform der Erfindung ist die erste Antenne des RFID-Kommunikationssystems vorteilhafterweise fest in dem RFID-Gerät angebracht. Da bei dieser Ausführungsform keine zwei separaten Apparate für RFID-Gerät und Antenne verwendet werden, kann ein insgesamt kompakteres RFID-Kommunikationssystem gebaut werden.

Dabei ist als ein Beispiel der ersten Ausführungsform der Transponder vorteilhafterweise fest in dem RFID-Gerät angebracht. Dadurch wird gewährleistet, dass der Transponder immer bei einem zugehörigen RFID-Gerät bleibt, der Transponder wird als drahtloser, interner Speicher des RFID-Geräts verwendet. Das RFID-Kommunikationssystem besteht bei dieser Ausführungsform nur aus einem, kompakt konstruierbaren Apparat.

In einem weiteren Beispiel der ersten Ausführungsform ist der Transponder vorteilhafterweise steckbar in dem RFID-Gerät angebracht und entfernbar.

Sind die Konfigurationsdaten auf solch einem abnehmbaren Transponder gespeichert können sie einfach transportiert werden. Dadurch können andere RFID-Geräte von anderen RFID-Kommunikationssystemen gleicher Bauart, an jedem beliebigen anderen Montageort, mit den auf dem Transponder gespeicherten Daten konfiguriert werden. Insbesondere funktioniert das auch dann, wenn ein RFID-Gerät so in seine Umgebung installiert ist, dass eine leitende Schnittstelle nicht zugänglich wäre, da die Übertragung der Konfigurationsdaten berührungslos erfolgt. Der Transponder kann auch benutzt werden um mehrere RFID-Geräte zu konfigurieren.

In einem weiteren Beispiel der ersten Ausführungsform ist der Transponder vorteilhafterweise außen am RFID-Gerät und im Empfangsbereich der ersten Antenne positioniert. Dadurch wird der Platz für den Steckplatz gespart.

In einem weiteren Beispiel der ersten Ausführungsform ist der Transponder vorteilhafterweise außerhalb des RFID-Geräts und im Empfangsbereich der ersten Antenne positioniert. Dadurch bleibt der Transponder auch bei einer Installation, bei der das RFID-Gerät unzugänglich ist, leicht transportierbar.

In einer zweiten Ausführungsform der Erfindung ist die erste Antenne des RFID-Kommunikationssystems vorteilhafterweise eine externe Antenne außerhalb des RFID-Geräts.

Dadurch kann ein flexibler einsetzbares RFID-Gerät gebaut werden. Verschiedene zu dem RFID-Gerät kompatible Antennen können je nach Bedarf als erste Antenne verwendet werden. Zudem können austauschbar entweder leistungsstärkere oder leistungsschwächere Antennen, entsprechend der am Montageort benötigten Reichweite des elektromagnetischen Feldes, benutzt werden. Außerdem wird ein reparaturbedingt notwendiger Austausch der ersten Antenne des RFID-Geräts wesentlich vereinfacht.

Als ein Beispiel der zweiten Ausführungsform ist der Transponder vorteilhafterweise fest in der externen ersten Antenne angebracht.

Dadurch wird gewährleistet, dass der Transponder immer bei einer zu seiner Kommunikationsfrequenz kompatiblen Antenne bleibt. Das Gesamtsystem aus erster Antenne und Transponder kann zudem zur Konfiguration von geeigneten RFID-Geräten verwendet werden.

In einem weiteren Beispiel der zweiten Ausführungsform ist der Transponder vorteilhafterweise steckbar in der ersten Antenne angebracht und entfernbar.

In einem weiteren Beispiel der zweiten Ausführungsform ist der Transponder vorteilhafterweise im Bereich der ersten Antenne, aber außerhalb der ersten Antenne, positioniert.

Der Transponder kann vorteilhafterweise benutzt werden, um die Funktionsfähigkeit der ersten Antenne zu testen. Dazu werden von der Konfigurations-Anwendung unabhängige Lese- und/oder Schreibtests durchgeführt. wozu z.B. die Gerätefirmware des RFID-Geräts verwendet werden kann. Dabei ist es denkbar im Transponder den allgemeinen Testablauf (d.h. einige oder alle notwendigen Testschritte) zu speichern, so dass die Firmware des RFID-Geräts die Lese- und/oder Schreibtests entsprechend der gespeicherten Testschritte durchführen kann. Außerdem ist es möglich nach jedem Lese- und/oder Schreibtest, die Testergebnisse auf dem Transponder zu speichern.

Die vorliegende Erfindung ermöglicht die berührungslose Konfiguration eines RFID-Geräts. Die Übertragung der Konfigurationsdaten von Transponder an RFID-Gerät erfolgt drahtlos über zwei Antennen. Daher wird keine zusätzliche Steckverbindung am RFID-Gerät benötigt. Folglich können Herstellungskosten gespart werden, außerdem wird das Entwerfen neuer RFID-Geräte vereinfacht und eine kompaktere Bauart ermöglicht. Des Weiteren können auch eingebaute RFID-Geräte, zu denen ein Zugang schwierig oder unmöglich ist, leicht konfiguriert werden.

Bei Verwendung eines mobilen Transponders ist es auch möglich RFID-Geräte an anderen Montageorten zu konfigurieren, Ersatzgeräte schnell mit den standortspezifischen Konfigurationsdaten zu versorgen, oder mehrere Geräte in kurzer Zeit zu konfigurieren.

Das RFID-Gerät bzw. dessen erste Antenne können durch den Transponder zusätzlich auf Funktionsfähigkeit überprüft werden, indem Schreib- und Lesetests durchgeführt werden. Am besten werden diese Tests direkt von der Gerätefirmware des Transponders ausgeführt.

Die vorliegende Erfindung wird im Folgenden anhand bevorzugter Ausführungsbeispiele in Bezug auf die beigefügten Figuren näher erläutert.
Fig.1 zeigt ein schematisches Blockschaltbild eines erfindungsmäßigen RFID-Kommunikationssystems,
Fig.2 zeigt ein schematisches Blockschaltbild einer ersten Ausführungsform des erfindungsmäßigen RFID-Kommunikationssystems, bei der die erste Antenne fest in dem RFID-Gerät angebracht ist,
Fig.3 zeigt ein schematisches Blockschaltbild eines Beispiels der ersten Ausführungsform, bei dem der Transponder im RFID-Gerät angebracht ist,
Fig.4 zeigt ein schematisches Blockschaltbild eines Beispiels der ersten Ausführungsform, bei dem der Transponder in dem RFID-Gerät steckbar angebracht ist und entnommen werden kann,
Fig.5 zeigt ein schematisches Blockschaltbild einer zweiten Ausführungsform des erfindungsmäßigen RFID-Kommunikationssystems, bei der die erste Antenne eine externe Antenne außerhalb des RFID-Geräts ist,
Fig.6 zeigt ein schematisches Blockschaltbild eines Beispiels der zweiten Ausführungsform, bei dem der Transponder fest in der ersten Antenne angebracht ist,
Fig.7 zeigt ein schematisches Blockschaltbild eines Beispiels der zweiten Ausführungsform, bei dem der Transponder steckbar in der ersten Antenne angebracht ist und entnommen werden kann, und
Fig.8 zeigt den schematischen Ablauf eines Konfigurationsverfahrens eines RFID-Geräts eines RFID-Kommunikationssystems.

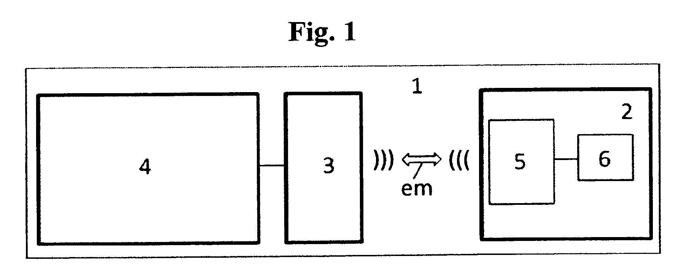

Fig.1 zeigt ein schematisches Blockschaltbild einer Grundidee eines RFID-Kommunikationssystems 1 gemäß der vorliegenden Erfindung. Das RFID-Kommunikationssystems 1 umfasst einen Transponder 2, eine erste Antenne 3 und ein RFID-Gerät 4.

Die erste Antenne 3 ist elektrisch mit dem RFID-Gerät 4 verbunden. Von der ersten Antenne 3 werden elektromagnetische Felder induktiv empfangen oder gesendet. Daten entsprechend der empfangenen Signale werden an das RFID-Gerät 4 über eine drahtgebundene Verbindung übermittelt. Diese Verbindung kann dabei entweder fest am RFID-Gerät 4 und/oder der ersten Antenne 3 fixiert sein oder an- und absteckbar sein.

Der Transponder 2 umfasst eine zweite Antenne 5, die ebenfalls elektromagnetische Signale empfangen und senden kann, und einen Speicher 6, der mit der zweiten Antenne 5 elektrisch über eine drahtgebundene Verbindung auf dem Transponder 2 verbunden ist. Über diese Verbindung werden empfangene oder zu sendende Daten von der zweiten Antenne 5 zum Speicher 6 oder umgekehrt übermittelt.

Als Antennen können dabei, je nach Bedarf, verschiedene Typen verwendet werden. Da die RFID-Geräte 4 im Allgemeinen auf eine bestimmte Frequenz festgelegt sind, sind die zugehörigen Antennen auf diese Frequenz oder auf einen abgegrenzten Frequenzbereich optimiert. Je nach Verwendung können allerdings Antennen unterschiedlicher Sendeleistung verwendet werden, entweder um eine größere Übertragungsreichweite zu erzielen oder, falls eine geringe Reichweite ausreichend ist, Energie zu sparen. Vorteilhaft sind auch Antennen deren Sendeleistung variabel einstellbar ist.

Zudem können die von den Antennen zur Kommunikation verwendeten elektromagnetischen Felder verschiedene Polarisationsformen aufweisen. Die Verwendung von zirkular polarisierten Feldern kann vorteilhaft sein, insbesondere bei mobilen Transpondern 2, da die Kommunikation des Transponders 2 mit dem RFID-Gerät 4 funktioniert, unabhängig davon, ob der Transponder 2 horizontal oder vertikal zum RFID-Gerät 4 orientiert ist. Um ein besseres Signal-Rauschverhältnis zu erhalten, können auch linear polarisierte oder nicht polarisierte Felder verwendet werden, was insbesondere bei fest angebrachtem Transponder 2 vorteilhaft ist.

Die von der zweiten Antenne 5 des Transponders 2 gesendeten bzw. empfangenen Daten werden im Speicher 6 gespeichert. Der Speicher 6 kann dabei durch alle gängigen magnetischen oder elektrischen Speicherarten realisiert werden. Vorteilhafterweise wird der Transponder 2 als Chip konstruiert um möglichst klein und leicht zu sein, wofür sich nichtvolatile Halbleiterspeicher wie z.B. FLASH-Speicher anbieten.

Es können Speicher 6 verwendet werden, die unbegrenzt beschreibar und lesbar sind wodurch die Möglichkeit eröffnet wird, die Kommunikationsdaten regelmäßig zu aktualisieren oder von einem Gerät zu anderen zu übertragen. Alternativ kann auch ein einmalig beschreibbarer aber unbegrenzt lesbarer Speicher verwendet werden. Dadurch kann verhindert werden, dass einmal aufgespielte, z.B. die optimalen Konfigurationsdaten überschrieben werden.

Der Transponder 2 dient dazu dem RFID-Gerät 4 Konfigurationsdaten zur Verfügung zu stellen. Als Konfigurationsdaten werden Daten bezeichnet, die Einstellungen zum Betrieb des RFID-Geräts 4 festlegen. Dazu gehören Einstellungen, die je nach Montageort eingestellt werden, und/oder Einstellungen, die eine optimale Kompatibilität zur verwendeten ersten Antenne 3 gewährleisten und/oder Daten die eine optimale Kommunikation mit dem Transponder 2 ermöglichen.

Beispiele für in den Konfigurationsdaten enthaltene Informationen sind Sendefrequenz, Sendeleistung, Übertragungsgeschwindigkeit, Datentyp, Modulationsverfahren, Kodierungsverfahren oder Zusatzfunktionen. Die Konfigurationsdaten werden im Speicher 6 des Transponders 2 gespeichert und bei Bedarf an die an den Speicher 6 angeschlossene zweite Antenne 5 übermittelt, von dieser an die erste Antenne 3 gesendet und schließlich an das RFID-Gerät 4 übermittelt.

Die Daten verbleiben so lange im Speicher 6 bis sie durch neue Konfigurationsdaten ersetzt werden. Neue Konfiguration desselben oder eines anderen RFID-Geräts 4 können z.B. drahtlos auf den Transponder 2 übertragen werden, wobei die alten Daten im Speicher 6 überschrieben werden. Des Weiteren wäre es möglich neue Konfigurationsdaten von z.B. einem Computer aus direkt über eine elektrische Schnittstelle auf den Transponder 2 zu speichern. Alternativ ist es vorstellbar, verschiedene Konfigurationsdaten gleichzeitig auf dem Speicher 6 des Transponders 2 zu speichern um zu ermöglichen die Konfigurationsdaten entsprechenden RFID-Geräten 4 zur Verfügung zu stellen.

Um die Konfigurationsdaten an das RFID-Gerät 4 zu übermitteln, entweder um das RFID-Gerät 4 neu zu konfigurieren, oder um die Konfigurationsdaten zum Betrieb des RFID-Kommunikationssystems 1 zur Verfügung zu stellen, wird von der zweiten Antenne 5 ein elektromagnetisches Feld, das in den Figuren schematisch dargestellt und mit em gekennzeichnet ist, ausgestrahlt. Dadurch wird in der ersten Antenne 3 eine Spannung induziert wodurch die Daten empfangen werden. Falls Daten in die andere Richtung, von RFID-Gerät 4 zu Transponder 2, übermittelt werden sollen, sendet die erste Antenne 3 das elektromagnetische Feld aus und die zweite Antenne 5 empfängt die Daten. Die Kommunikation der beiden Antennen findet bei einer für beide Antennen geeigneten Frequenz statt. Je nach verwendeter Frequenz kann die Reichweite des elektromagnetischen Feldes und damit die maximale Entfernung des Transponders 2 zum RFID-Gerät 4 während der Übertragung der Kommunikationsdaten variieren. Es ist auch vorstellbar ein erfindungsgemäßes RFID-Kommunikationssystem 1 zu entwickeln, das die Konfigurationsdaten auf unterschiedlichen oder variablen Frequenzen sendet und/oder empfängt.

Geräte in Figuren haben auch noch weitere Komponenten, die aber aus Klarheitsgründen nicht dargestellt sind.

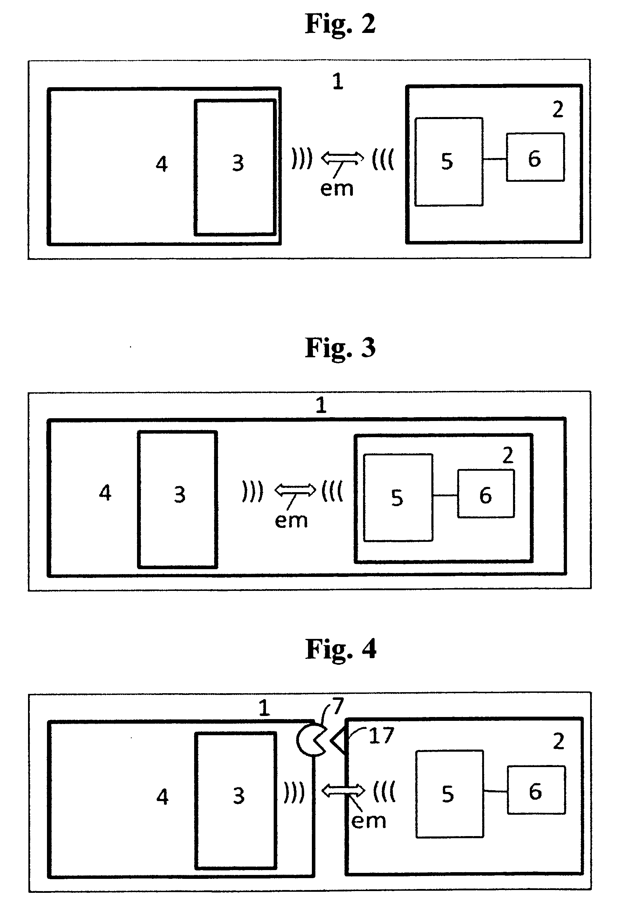

Eine spezielle erste Ausführungsform des RFID-Kommunikationssystems 1 ist in Fig.2 dargestellt. Die erste Antenne 3, die an das RFID-Gerät 4 elektrisch angeschlossen ist, ist dabei vollständig im RFID-Gerät 4 integriert, wodurch eine kompaktere Bauweise des RFID-Geräts 4 ermöglicht wird. Der Transponder 2 ist wie oben beschrieben mit einer zweiten Antenne 5 und einem daran angeschlossenen Speicher 6 ausgestattet. Fig.2 ist gleichzeitig ein Beispiel für diese Ausführungsform der Erfindung, bei welcher der Transponder 2 außerhalb des RFID-Geräts 4 aber innerhalb des Empfangsbereichs der ersten Antenne 3 platziert wird. Dabei kann der Transponder 2 auch alternativ außen am RFID-Gerät 4 angebracht werden.

Um den Transponder 2, der z.B. ortsspezifische Konfigurationsdaten gespeichert hat, stets sicher bei dem entsprechenden RFID-Gerät 4 zu belassen, und ihn somit quasi als drahtlosen internen Speicher zu benutzen, kann er auch vollständig in das RFID-Gerät 4 integriert werden, wie ein Beispiel in Fig.3 zeigt.

Falls der Transponder 2 zwar im Normallfall fest und sicher am RFID-Gerät 4 aufbewahrt werden soll, aber gegebenenfalls auch einfach entfernt werden muss, um ihn z.B. zu anderen RFID-Geräten 4 zu transportieren, kann er in das RFID-Gerät steckbar gestaltet werden. Ein dafür notwendiger Steckplatz 7 bzw. 17 ist in dem Beispiel in Fig.4 schematisch dargestellt.

Dabei stellt 7 schematisch eine Steckdose dar, die am RFID-Gerät 4 angebracht ist, und 17 einen Stecker dar, der am Transponder 2 angebracht ist. Ebenso ist möglich den Stecker 17 am RFID-Gerät 4 und die Steckdose 7 am Transponder 2 anzubringen. Der Stecker 17 kann einfach in die Steckdose 7 gesteckt und wieder abgezogen werden, es ist aber gewährleistet, dass der Transponder, falls er an das RFID-Gerät 4 gesteckt ist, sicher angebracht ist, d.h. nicht abfallen kann. Außerdem ist gewährleistet, dass falls der Transponder 2 an das RFID-Gerät 4 gesteckt ist, seine Antenne 3 im Empfangsbereich der ersten Antenne 5 positioniert ist.

Stecker 17 und Steckdose 7 können dabei entweder eigenständige, an die jeweiligen Vorrichtungen angebrachte Teile sein, oder Bestandteil der Vorrichtungen selber sein. So ist es z.B. möglich einen Schlitz in das RFID-Gerät 4 zu arbeiten, in den der Transponder 2 teilweise oder vollständig eingeführt werden kann. Alternativ sind auch andere Befestigungsarten des Transponders 2 am RFID-Gerät 4 vorstellbar, die nicht explizit und wörtlich den Begriff "steckbar" erfüllen aber ähnliche Eigenschaften haben, wie z.B. Haft- oder Klebetechniken.

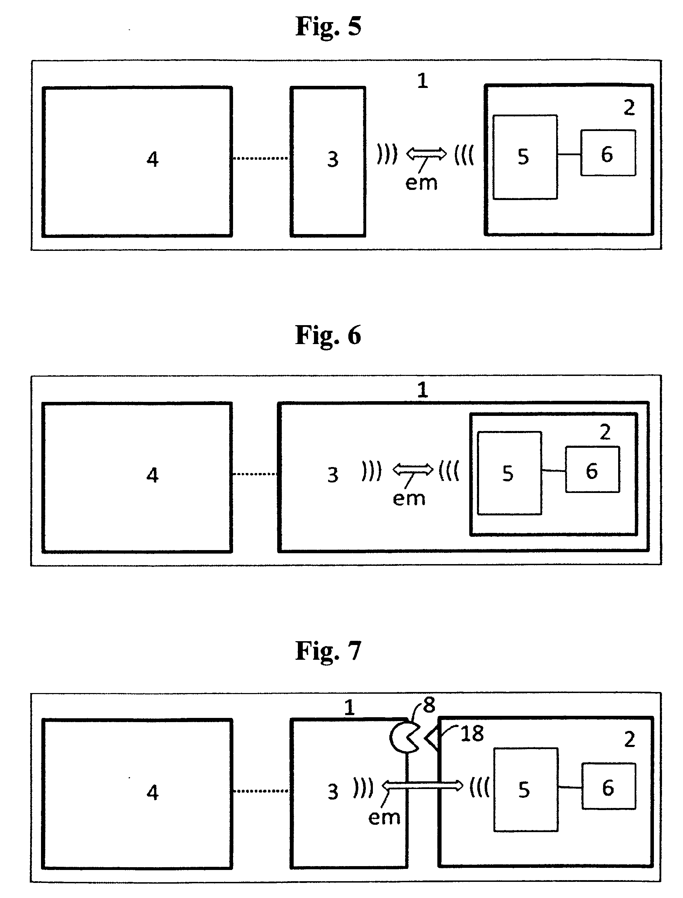

Ein schematisches Blockschaltbild einer zweiten Ausführungsform des RFID-Kommunikationssystems 1 wird in Fig.5 dargestellt. Die erste Antenne 3, die an das RFID-Gerät 4 elektrisch angeschlossen ist, ist dabei eine externe Antenne, die sich außerhalb des RFID-Geräts 4 befindet und von diesem getrennt werden kann. Dadurch kann ein flexibler montierbares RFID-Kommunikationssystem 1 hergestellt werden. Weiterhin können RFID-Geräte 4 mit verschiedenen kompatiblen Antennen 3 je nach Bedarf kombiniert werden. Zudem ist es bei einer solchen Ausführungsform leichter die externe Antenne 3 im Falle eines Defekts auszutauschen. Der Transponder ist wiederum wie oben beschrieben mit einer zweiten Antenne 5 und einem daran angeschlossenen Speicher 6 ausgestattet. Fig.5 ist gleichzeitig ein erstes Beispiel für die zweite Ausführungsform der Erfindung, bei der der Transponder 2 außerhalb des RFID-Geräts 4 aber innerhalb des Sende- und Empfangsbereichs der ersten Antenne 3 platziert wird.

In Fig.6 ist ein weiteres Beispiel der zweiten Ausführungsform dargestellt, in dem der Transponder 2 fest in die externe erste Antenne 3 integriert ist. Dadurch bleiben die Konfigurationsdaten noch bedingt flexibel, die erste Antenne 3 kann mitsamt Transponder 2 an andere Montageorte transportiert werden um dort die Konfiguration eines anderen RFID-Geräts 4 vorzunehmen. Andererseits wird gewährleistet, dass sich der Transponder 2 stets im Sende- und Empfangsbereich der Antenne 3 befindet.

Um das RFID-Kommunikationssystem 1 noch flexibler einsetzbar zu gestalten, aber während des Betriebs stets eine gute Verbindung zwischen Transponder 2 und erster Antenne 3 zu gewährleisten, schlägt ein weiteres Beispiel der zweiten Ausführungsform einen Steckplatz 8 für den Transponder an der externen Antenne 3 vor. Der Steckplatz ist mit einer Steckdose 8 und einem Stecker 18 in Fig.7 schematisch dargestellt und dabei wie oben beschriebener Steckdose 7 und Stecker 17 ausführbar.

Zusätzlich sieht die vorliegende Erfindung vor, die Funktionsfähigkeit der ersten Antenne 3 mit Hilfe des Transponders 2 zu prüfen. Dazu werden z.B. Schreib- und/oder Lesetests ausgeführt, die unabhängig von der Konfigurations-Anwendung sind. Die Schritte der Schreib- und/oder Lesetests können dabei von der Gerätefirmware des RFID-Geräts 4 selbst ausgeführt werden. Natürlich ist es möglich nur einen Schreibtest oder nur einen Lesetest zu vollziehen. Die notwendigen Schritte dieser Schreib- und/oder Lesetest können auf dem Transponder 2 gespeichert sein und nach jedem Test können die entsprechenden Testergebnisse in den Speicher 6 des Transponders 2 geschrieben werden.

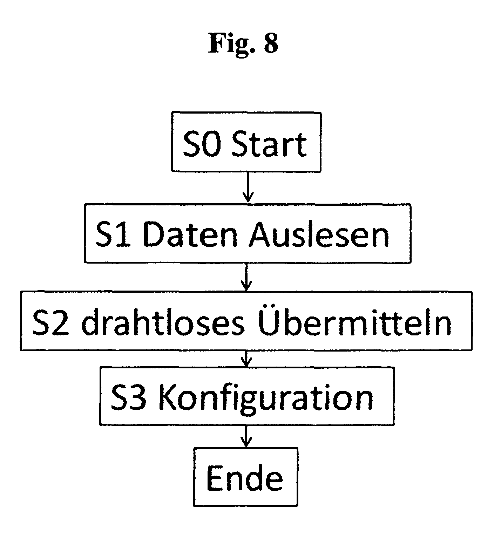

Fig.8 zeigt ein Verfahren zur Konfiguration eines RFID-Geräts 4 eines RFID-Kommunikationssystems 1 mittels eines Transponders 2. Nach dem Starten der Konfigurationssequenz werden dazu in S1 Konfigurationsdaten aus einem Speicher 6 des Transponders 2 ausgelesen. In S2 findet eine drahtlose Übermittlung der Konfigurationsdaten vom Transponder 2 an das RFID-Gerät 4 statt. Dabei werden vorzugsweise Antennen verwendet, die elektromagnetische Felder erzeugen bzw. empfangen. Schließlich führt Schritt S3 die Konfiguration des RFID-Geräts 4 mittels der Konfigurationsdaten aus. Nach Abschluss der Konfiguration wird die Konfigurationssequenz beendet.

Die vorliegende Erfindung ist nicht auf die dargestellten Ausführungsbeispiele beschränkt, vielmehr können ein oder mehrere Merkmale eines Ausführungsbeispiels auch in einem anderen Ausführungsbeispiel verwendet werden.

## Patentansprüche

1. Radio-Frequency-Identification-Kommunikationssystem (1) zur Konfiguration und Parametrierung,
wobei das Radio-Frequency-Identification-Kommunikationssystem (1) ein Radio-Frequency-Identification-Gerät (4) mit einer Gerätefirmware,
eine erste, mit dem Radio-Frequency-Identification-Gerät (4) verbundene Antenne (3) zum Senden und Empfangen von Daten und
einen Transponder (2) umfasst;
wobei der Transponder (2) eine zweite Antenne (5) zum Senden und Empfangen von Daten und einen Speicher (6) zum Speichern von Konfigurationsdaten für das Radio-Frequency-Identification-Gerät (4) umfasst; und
wobei die gespeicherten Konfigurationsdaten dem Radio-Frequency-Identification-Gerät (4) über die beiden Antennen (3, 5) drahtlos zur Verfügung stehen, **dadurch gekennzeichnet, dass**
die Gerätefirmware des Radio-Frequency-Identification-Geräts (4) geeignet ist, um die Funktionsfähigkeit der ersten Antenne (3) zu testen, indem sie von einer Konfigurations-Anwendung unabhängige Lese- und/oder Schreibtests durchführt,
wobei die Testschritte der Lese- und/oder Schreibtests auf dem Transponder (2) gespeichert sind und/oder die Testergebnisse nach jedem Lese- und/oder Schreibtest auf dem Transponder (2) gespeichert werden.

2. Radio-Frequency-Identification-Kommunikationssystem (1) gemäß Anspruch 1, wobei die erste Antenne (3) in dem Radio-Frequency-Identification-Gerät (4) angebracht ist.

3. Radio-Frequency-Identification -Kommunikationssystem (1) gemäß Anspruch 2, wobei der Transponder (2) fest in dem Radio-Frequency-Identification-Gerät (4) angebracht ist.

4. Radio-Frequency-Identification-Kommunikationssystem (1) gemäß Anspruch 2, wobei der Transponder (2) steckbar in dem Radio-Frequency-Identification-Gerät (4) angebracht ist und entfernbar ist.

5. Radio-Frequency-Identification-Kommunikationssystem (1) gemäß Anspruch 2, wobei der Transponder (2) außen am Radio-Frequency-Identification-Gerät (4) und im Empfangsbereich der ersten Antenne (3) positioniert ist.

6. Radio-Frequency-Identification-Kommunikationssystem (1) gemäß Anspruch 2, wobei der Transponder (2) außerhalb des Radio-Frequency-Identification-Geräts (4) und im Empfangsbereich der ersten Antenne (3) positioniert ist.

7. Radio-Frequency-Identification-Kommunikationssystem (1) gemäß Anspruch 1, wobei die erste Antenne (3) eine externe Antenne außerhalb des Radio-Frequency-Identification-Geräts (4) ist.

8. Radio-Frequency-Identification-Kommunikationssystem (1) gemäß Anspruch 7, wobei der Transponder (2) in der ersten Antenne (3) angebracht ist

9. Radio-Frequency-Identification-Kommunikationssystem (1) gemäß Anspruch 7, wobei der Transponder (2) steckbar in der ersten Antenne (3) angebracht ist und entfernbar ist.

10. Radio-Frequency-Identification-Kommunikationssystem (1) gemäß Anspruch 7, wobei der Transponder (2) außerhalb der ersten Antenne (3) und in deren Empfangsbereich positioniert ist.

## Claims

1. Radio-frequency-identification-communication-system (1) for configuration and parameterization,
wherein the radio-frequency-identification-communication-system (1) comprises a radio-frequency-identification-device (4) with a device firmware, a transponder (2) and a first antenna (13), which is connected to the radio-frequency-identification-device (4) for transmitting and receiving data;
wherein the transponder (2) comprises a second antenna (5) for transmitting and receiving data and a storage (6) for storing configuration data for the radio-frequency-identification-device (4), and
wherein the stored configuration data are available for the radio-frequency-identification-device (4), in a wireless manner via both antennas (3,5)
**characterized in that**
the device firmware of the radio-frequency-identification-device (4) is suitable for testing the functionality of the first antenna (3) by performing a reading-and/or writing-test which is independent from a configuration application,
wherein the testing steps relating to the reading and/or writing tests are stored on the transponder (2) after each reading and/or writing test.

2. Radio-frequency-identification-communication-system (1) according to claim 1,
wherein the first antenna (3) is mounted in the radio-frequency-identification-device (4).

3. Radio-frequency-identification-communication-system (1) according to claim 2,
wherein the transponder (2) is firmly attached inside the radio-frequency-identification-device (4).

4. Radio-frequency-identification-communication-system (1) according to claim 2,
wherein the transponder (2) is mounted pluggable and removable in the radio-frequency-identification-device (4).

5. Radio-frequency-identification-communication-system (1) according to claim 2,
wherein the transponder (2) is positioned on the outside of the radio-frequency-identification-device (4) and in the detection area of the first antenna (3).

6. Radio-frequency-identification-communication-system (1) according to claim 2,
wherein the transponder (2) is positioned beyond the radio-frequency-identification-device (4) and in the detection area of the first antenna (3).

7. Radio-frequency-identification-communication-system (1) according to claim 1,
wherein the first antenna (3) represents an external antenna beyond the radio-frequency-identification-device (4).

8. Radio-frequency-identification-communication-system (1) according to claim 7,
wherein the transponder (2) is mounted in the first antenna (3).

9. Radio-frequency-identification-communication-system (1) according to claim 7,
wherein the transponder (2) is pluggable mounted in the first antenna (3) and is removable.

10. Radio-frequency-identification-communication-system (1) according to claim 7,
wherein the transponder (2) is positioned beyond the first antenna (3) and inside of its detection area.

## Revendications

1. Système de communication d'identification par radiofréquences (1) pour la configuration et le paramétrage,
dans lequel le système de communication d'identification par radiofréquences (1) comprend un appareil d'identification par radiofréquences (4) ayant un micrologiciel, une première antenne (3) reliée à l'appareil d'identification par radiofréquences (4) pour envoyer et recevoir des données, et un transpondeur (2) ;
dans lequel le transpondeur (2) comprend une seconde antenne (5) pour envoyer et recevoir des données, et une mémoire (6) pour mémoriser des données de configuration pour l'appareil d'identification par radiofréquences (4) ; et
dans lequel les données de configuration mémorisées de l'appareil d'identification par radiofréquences (4) sont mises à disposition sans fil par l'intermédiaire des deux antennes (3,5),
**caractérisé en ce que**
le micrologiciel de l'appareil d'identification par radiofréquences (4) est fourni pour tester le bon fonctionnement de la première antenne (3) en effectuant un test de lecture ou d'écriture indépendamment d'une configuration-application,
dans lequel les étapes de test de lecture et/ou d'écriture sont mémorisées sur le transpondeur, et/ou les résultats de test de lecture et/ou d'écriture sont mémorisés sur le transpondeur.

2. Système de communication d'identification par radiofréquences (1) selon la revendication 1, dans lequel ladite première antenne (3) est montée dans l'appareil d'identification par radiofréquences (4).

3. Système de communication d'identification par radiofréquences (1) selon la revendication 2, dans lequel le transpondeur (2) est monté de manière fixe dans l'appareil d'identification par radiofréquences (4).

4. Système de communication d'identification par radiofréquences (1) selon la revendication 2, dans lequel le transpondeur (2) est monté de manière enfichable dans l'appareil d'identification par radiofréquences (4), et également de manière amovible.

5. Système de communication d'identification par radiofréquences (1) selon la revendication 2, dans lequel le transpondeur (2) est positionné à l'extérieur de l'appareil d'identification par radiofréquences (4), et est positionné dans la zone de réception de la première antenne (3).

6. Système de communication d'identification par radiofréquences (1) selon la revendication 2, dans lequel le transpondeur (2) est positionné à l'extérieur de l'appareil d'identification par radiofréquences (4), et dans la zone de réception de la première antenne (3).

7. Système de communication d'identification par radiofréquences (1) selon la revendication 1, dans lequel la première antenne (3) est une antenne externe située à l'extérieur de l'appareil d'identification par radiofréquences (4).

8. Système de communication d'identification par radiofréquences (1) selon la revendication 7, dans lequel le transpondeur (2) est monté dans la première antenne (3)

9. Système de communication d'identification par radiofréquences (1) selon la revendication 7, dans lequel le transpondeur (2) est monté de manière enfichable dans la première antenne (3), et également de manière amovible.

10. Système de communication d'identification par radiofréquences (1) selon la revendication 7, dans lequel le transpondeur (2) est positionné à l'extérieur de la première antenne (3), et dans sa zone de réception.
